(19) Europäisches Patentamt

European Patent Office

Office européen des brevets

(11) **EP 1 688 315 A2**

(12) **EUROPEAN PATENT APPLICATION**

(43) Date of publication:
**09.08.2006 Bulletin 2006/32**

(51) Int Cl.:
***B60R 21/0132*** *(2006.01)*

(21) Application number: **06075230.0**

(22) Date of filing: **02.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **08.02.2005 US 53128**

(71) Applicant: **Delphi Technologies, Inc.**
**Troy, MI 48007 (US)**

(72) Inventors:
• **Porter, Stephen B.**
**Noblesville, IN 46062 (US)**
• **Walden, Michael K.**
**Carmel, IN 46033 (US)**

• **Schubert, Peter J.**
**Carmel, IN 46032-7007 (US)**
• **Pagington, Scott A.**
**Greentown, IN 46936 (US)**
• **McConnel, Robert R.**
**Lafayette, IN 47905 (US)**
• **Stavroff, Brian M.**
**Galveston, IN 46932 (US)**

(74) Representative: **Denton, Michael John**
**Delphi European Headquarters,**
**64 avenue de la Plaine de France,**
**Paris Nord II,**
**B.P. 65059, Tremblay en France**
**95972 Roissy Charles de Gaulle Cedex (FR)**

(54) **Method of producing a rollover arming signal based on off-axis acceleration**

(57)     An arming signal for enabling deployment of rollover safety devices (28) by a vehicle rollover detection apparatus (20, 26) is based on an off-axis measure of vehicle acceleration. A low-g accelerometer (22) mounted perpendicular to the longitudinal axis of the vehicle (10) but at an angle with respect to Earth's ground plane detects components of both lateral and vertical vehicle accelerations. The measurement angle is selected to apportion the lateral vs. vertical measurement sensitivity in accordance with calibrated lateral and vertical acceleration thresholds, and an arming signal is generated when a filtered version of the measured acceleration exceeds an arming threshold (40, 42, 44, 48).

Fig.2A.

(Cont. next page)

Fig.2B.

**Description**

TECHNICAL FIELD

The present invention relates to rollover detection in motor vehicles, and more particularly to a method of arming a rollover detection system based on an off-axis measure of vehicle acceleration.

BACKGROUND OF THE INVENTION

Various systems have been developed for automatically deploying safety devices such as seat belt pretensioners, air bags and/or pop-up roll bars when there is a significant risk of occupant injury due to vehicle rollover. To prevent inadvertent or unnecessary deployment of the safety devices, most systems are designed so that deployment can only occur if the presence of operating conditions consistent with a rollover event is independently confirmed by a safing or arming signal. This can significantly increase system cost because independent confirmation usually requires a duplicate set of sensors for developing the safing/arming signal. Accordingly, what is needed is a more cost-effective way of developing an arming or safing signal for a vehicle rollover detection system.

SUMMARY OF THE INVENTION

The present invention is directed to an improved method of developing an arming or safing signal for enabling deployment of rollover safety devices based on an off-axis measure of vehicle acceleration. A low-g accelerometer mounted perpendicular to the longitudinal axis of the vehicle but at an angle with respect to Earth's ground plane detects components of both lateral and vertical vehicle accelerations. The measurement angle is selected to apportion the lateral vs. vertical measurement sensitivity based on typical safing thresholds for lateral and vertical acceleration, and an arming signal is produced when a filtered version of the measured acceleration exceeds an arming threshold.

BRIEF DESCRIPTION OF THE DRAWINGS

FIG. 1 is a diagram of a vehicle including an off-axis accelerometer mounted according to this invention, and a microprocessor-based control unit (MCU) for generating a rollover arming signal based on the measured acceleration;
FIG. 2A is a diagram depicting the off-axis accelerometer of FIG. 1, along with component vertical and lateral accelerations detected by the accelerometer;
FIG. 2B is a diagram depicting a determination of the accelerometer mounting angle according to this invention;

FIG. 3 is a block diagram depicting a first embodiment of a rollover arming method according to this invention;
FIG. 4 is a block diagram depicting a second embodiment of a rollover arming method according to this invention;
FIG. 5 is a block diagram depicting a third embodiment of a rollover arming method according to this invention;
FIG. 6 is a block diagram depicting a fourth embodiment of a rollover arming method according to this invention;
FIG. 7 is a block diagram depicting a fifth embodiment of a rollover arming method according to this invention;
FIG. 8 is a block diagram depicting a sixth embodiment of a rollover arming method according to this invention;
FIG. 9 is a block diagram depicting a seventh embodiment of a rollover arming method according to this invention;
FIG. 10 is a block diagram depicting an eighth embodiment of a rollover arming method according to this invention;
FIG. 11 is a block diagram depicting a ninth embodiment of a rollover arming method according to this invention;
FIG. 12 is a block diagram depicting a tenth embodiment of a rollover arming method according to this invention; and
FIG. 13 is a block diagram depicting an eleventh embodiment of a rollover arming method according to this invention.

DESCRIPTION OF THE PREFERRED EMBODIMENT

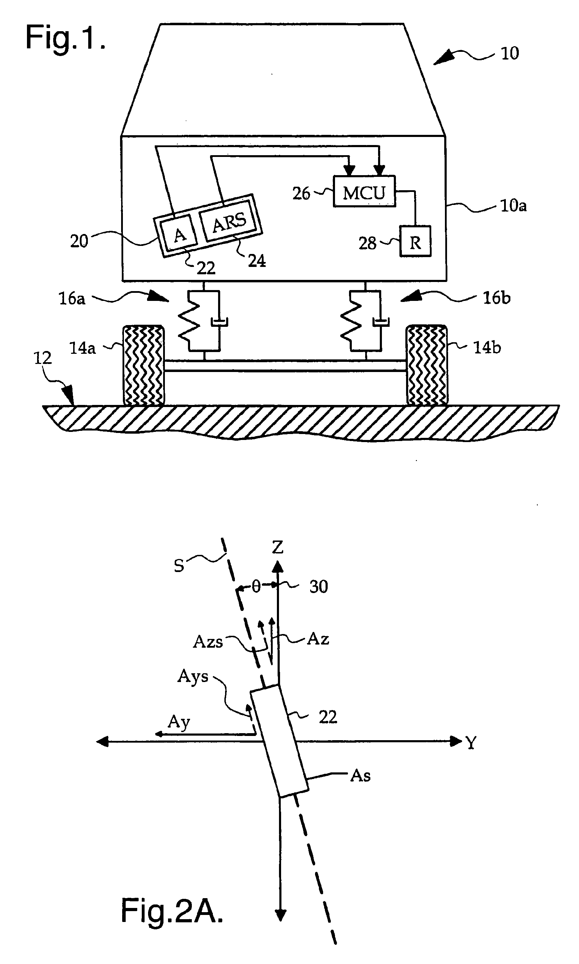

FIG. 1 diagrammatically depicts the rear of a vehicle 10 operated on a surface 12, and receding from the viewer. The vehicle body 10a is coupled to wheels 14a, 14b by a set of suspension members 16a, 16b, and a rollover sensor module 20 is mounted on the vehicle 10a. The rollover sensor module 20 includes both a low-g accelerometer (A) 22 for rollover safing and an angular rate sensor (ARS) 24 for primary rollover detection. Within the sensor module 20, the accelerometer 22 is mounted to sense vertical acceleration (i.e, acceleration perpendicular to Earth's ground plane), and the module 22 is mounted at an angle laterally offset from the vertical so the accelerometer 22 measures components of both the vertical acceleration and the lateral acceleration of the vehicle. The angular rate sensor 24 is oriented to detect angular rotation about the longitudinal axis of the vehicle, and the lateral offset mounting angle of the sensor module 20 does not influence the operation of sensor 24.

The outputs of accelerometer 22 and angular rate sensor 24 are applied as inputs along with other commonly measured parameters to a microprocessor-based control unit (MCU) 26. The MCU 26 is coupled to various rollover restraints such as seat belt pretensioners, side curtain airbags and/or a pop-up roll bar (collectively designated by the block 28), and issues deployment commands for one or more of the restraints when required for the protection of the vehicle passengers. In general, MCU 26 executes an arming algorithm based on the output of accelerometer 22 and a primary rollover detection algorithm based on the output of angular rate sensor 24 and other related sensor data. The arming algorithm generates an arming signal whenever conditions consistent with a rollover event are present, and the arming signal enables the primary rollover detection algorithm to deploy the restraints 28 if the angular rate signal (in combination with other signals) indicates that there is a significant risk of occupant injury due to vehicle rollover. If desired, MCU 26 may include separate processors for executing the arming and primary rollover detection algorithms.

The present invention relates to the function of the arming algorithm - that is, the generation of an arming signal based on the output of off-axis accelerometer 22. The diagram of FIG. 2A illustrates the accelerometer 22 laterally offset from the vertical (Z) axis 30 (i.e., an axis perpendicular to Earth's ground plane) by an angle θ. During vehicle operation, accelerometer 22 is subject to both vertical (i.e., Z-axis) acceleration as designated by the vector Az, and lateral (i.e., Y-axis) acceleration as designated by the vector Ay. The acceleration signal As produced by accelerometer 22 is the sum of components of the accelerations Az and Ay along the sensing axis S. The sensed component Azs of the vertical acceleration Az is given by (Az cosθ), while sensed component Ays of the lateral acceleration Ay is given by (Ay sinθ). Thus, the sensed acceleration As is equal to the sum (Azs + Ays) or (Az cosθ + Ay sinθ).

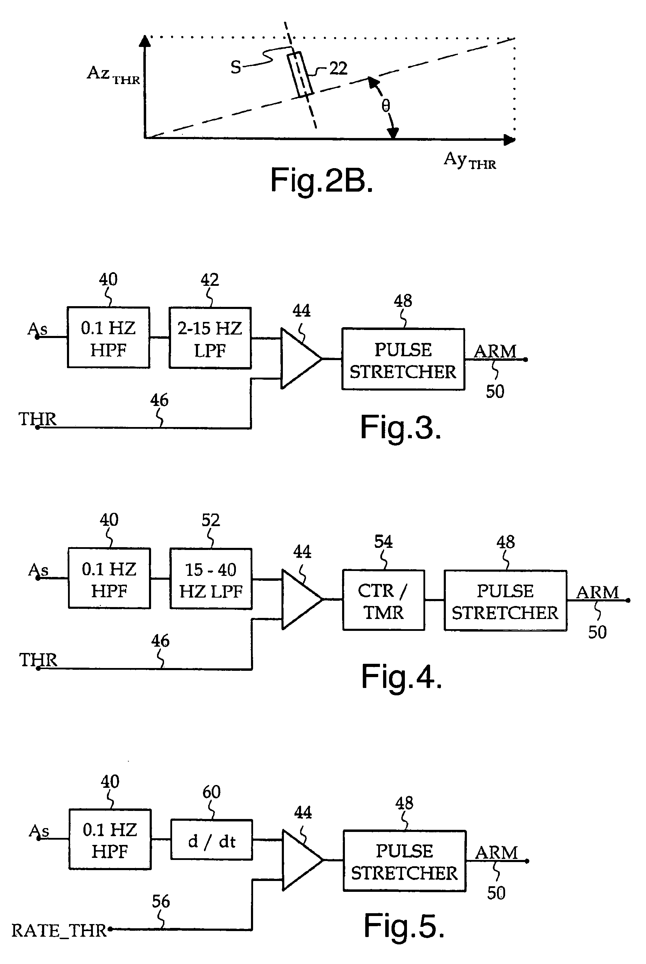

It will be seen that the offset angle θ determines the sensitivity of the signal As to vertical acceleration Az and lateral acceleration Ay. At small values of θ, the signal As is more sensitive to vertical acceleration Az, while at larger values of θ, the signal As is more sensitive to lateral acceleration Ay. According to this invention, the offset angle θ is selected in accordance with lateral and vertical acceleration safing thresholds $Ay_{THR}$, $Az_{THR}$, and the arming algorithm produces an arming signal when a filtered version of the acceleration As exceeds an arming threshold THR which may be static or dynamic. Referring to FIG. 2B, a non-negative vertical acceleration threshold is designated by the vector $Az_{THR}$, a non-negative lateral acceleration threshold is designated by the vector $Ay_{THR}$, and the offset angle θ is given by arctan($Ay_{THR}$/$Az_{THR}$). Since the vertical acceleration threshold $Az_{THR}$ for rollover arming is typically much lower than the lateral acceleration threshold $Ay_{THR}$, the offset angle θ is relatively small to provide greater sensitivity to vertical acceleration Az.

In general, the function of the arming algorithm is to compare the off-axis acceleration detected by accelerometer 22 with arming threshold THR, and to issue an arming signal if the detected acceleration exceeds the arming threshold. Initially however, the acceleration signal is processed to isolate the signal content of interest and to compensate for sensor drift. Also, a pulse stretching function is used to generate the arming signal so that it is continuously active for at least a given period of time. Moreover, the arming threshold and/or the duration of the pulse stretcher can be adaptively adjusted based on identified characteristics of the detected acceleration, or rotational rate or other signals available from the vehicle.

The block diagrams of FIGS. 3-13 depict several different embodiments of the arming algorithm. In practice, the MCU 26 implements the various blocks digitally, although analog or discrete implementations are also feasible. Other embodiments variously combining the concepts of the illustrated embodiments are also possible. Similar functional blocks have been assigned the same reference numerals for continuity.

In the first embodiment of FIG. 3, the acceleration signal As is initially applied to high-pass filter 40 and the result is applied to low-pass filter 42. Of course, the same functionality could alternatively be described as a band-pass filter. The high-pass filter 40 may have a cutoff frequency of about 0.1 Hz, and essentially removes the DC component of the acceleration signal As. The low-pass filter 42 may have a cutoff frequency in the range of 2-15 Hz, and provides a relatively smooth heavily filtered output. Comparator 44 compares the output of filter 42 with an arming threshold THR on line 46, and produces an output for activating the pulse-stretcher block 48 if the filtered acceleration signal exceeds THR. When activated, the pulse-stretcher 48 produces an output signal of predetermined duration on the line 50, and such output signal serves as an arming signal (ARM) for the primary rollover detection algorithm.

In the second embodiment of FIG. 4, the low-pass filter 42 is replaced with an anti-aliasing low-pass filter 52 having a higher cutoff frequency (15-40 Hz). In this case, the filter output is subject to significant fluctuation, and a functional block 54 is inserted between comparator 44 and pulse stretcher 48 to ensure that the pulse stretcher 48 is only activated if the filtered acceleration exceeds the threshold THR for a significant amount of time. In a digital implementation where the output of comparator 44 is periodically sampled, for example, the block 54 can be configured to activate pulse-stretcher 48 only if the comparator output is active for at least a specified number of samples within a given interval.

In the third embodiment of FIG. 5, the output of high-pass filter 40 is applied to a differentiator (d/dt) 57 instead of a low-pass filter. The differentiator 57 provides an output indicative of the rate of change of the acceleration signal As, and the comparator 44 compares the determined rate of change to a rate threshold (RATE_THR) on line 56. In general, impending crash events and rollover events are typically accompanied by relatively high rate of change in lateral and/or vertical acceleration, and the comparator 44 produces an output for activating the pulse-stretcher block 48 if the determined rate exceeds RATE_THR.

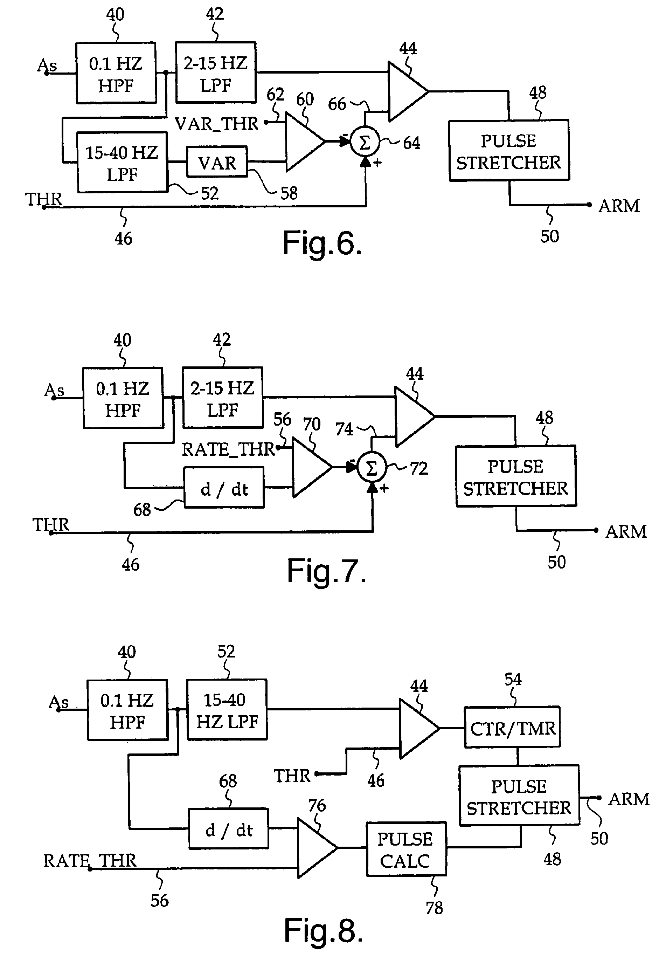

The fourth and fifth embodiments of FIGS. 6-7 resemble the first embodiment of FIG. 3 in that a heavily filtered version of the acceleration signal is compared to an arming threshold to activate pulse stretcher 48, but also include mechanisms for dynamically adjusting the arming threshold THR when a secondary parameter indicates a significant likelihood of an impending rollover event. In general, dynamically adjusting the arming threshold THR in this way is beneficial because it allows arming threshold THR to be calibrated relatively high to provide immunity from rough roads and certain abuse events.

In the fourth embodiment of FIG. 6, the anti-aliasing low-pass filter 52 filters the output of high-pass filter 40, and its output is applied to block 58 which provides a measure of the signal variation. The function of block 58 may be achieved by computing a variance or a standard deviation over a given time period, by counting zero crossings over a time period, by measuring the RMS value of the signal, or with some other technique. In any event, a differential amplifier 60 compares the output of block 58 with a variation threshold VAR_THR on line 62, and produces an output representative of the amount by which the computed variation exceeds VAR_THR. The differential amplifier output is applied to a summing block 64 along with the default arming threshold THR on line 46, and the result on line 66 is applied as an arming threshold to comparator 44 for comparison with the heavily filtered acceleration signal. Significant variation of the anti-aliased acceleration signal is consistent with the possibility of a rollover event, and the summing block 64 reduces the default arming threshold THR in relation to the amount by which the measured variation exceeds the variation threshold VAR_THR. Of course, reducing the arming threshold THR allows earlier activation of the pulse stretcher 48 by comparator 44, and hence the arming signal on line 50. On the other hand, the likelihood of an impending rollover is not indicated when the measured variation of block 58 is less than VAR_THR; in this case, arming threshold THR is not altered.

In the fifth embodiment of FIG. 7, the block 68 differentiates the output of high-pass filter 40 to determine the rate of change in detected acceleration, and a differential amplifier 70 compares the determined rate with the rate threshold RATE_THR on line 56. The differential amplifier 70 produces an output representative of the amount by which the determined variation exceeds RATE_THR, and such output is applied to a summing block 72 along with the default arming threshold THR on line 46. The output of summing block 72 on line 74 is applied as an arming threshold to comparator 44 for comparison with the heavily filtered acceleration signal. As mentioned in reference to the third embodiment of FIG. 5, impending crash events and rollover events are typically accompanied by relatively high rate of change in lateral and/or vertical acceleration, and the summing block 72 reduces the default arming threshold THR in relation to the amount by which the determined acceleration rate exceeds the rate threshold RATE_THR. As mentioned in respect to the fourth embodiment of FIG. 6, reducing the arming threshold THR allows earlier activation of the pulse stretcher 48 by comparator 44, and hence the arming signal on line 50. On the other hand, the likelihood of an impending rollover is not indicated when the determined acceleration rate is less than the rate threshold RATE_THR; in this case, arming threshold THR is not altered.

The sixth and seventh embodiments of FIGS. 8-9 resemble the second embodiment of FIG. 4 in that an anti-aliased version of the acceleration signal is compared to an arming threshold to activate pulse stretcher 48, but also include mechanisms for dynamically adjusting the duration of pulse stretcher 48 when a secondary parameter indicates a significant likelihood of an impending rollover event. In general, this is beneficial because it allows fast activation of the arming signal by the anti-aliased acceleration signal, coupled with an arming signal duration that is based on a more measured indication of rollover potential.

In the sixth embodiment of FIG. 8 the block 68 differentiates the output of high-pass filter 40 to determine the rate of change in detected acceleration, and a differential amplifier 76 forms a difference between the determined rate and the rate threshold RATE_THR on line 56. The difference is applied to a pulse calculation block 78, which determines a corresponding duration for pulse stretcher 48. In general, the block 78 produces a very short pulse duration under conditions where the determined rate is less than RATE_THR, and proportionately longer pulse durations under conditions where the determined rate exceeds RATE_THR.

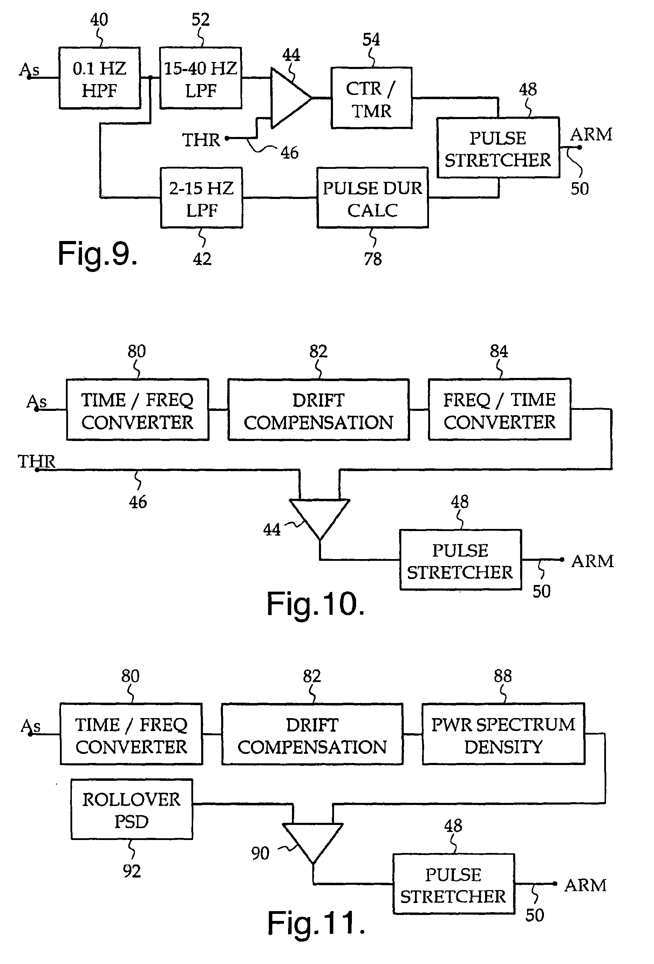

In the seventh embodiment of FIG. 9, the low-gain low-pass filter 42 is applied to the output of high-pass filter 40, and the output of filter 42 provides an input to pulse duration block 78, which determines a corresponding duration for pulse stretcher 48. The block 78 produces a pulse duration that is generally proportional to the heavily filtered acceleration signal, over a range from 40ms to 500ms, for example. For example, the pulse duration may be calculated according to the expression:

$$A + B * (|LPF_{52}| - C)$$

where A, B and C are calibrated constants, and $LPF_{52}$ is the output of low-pass filter block 52.

The eighth and ninth embodiments of FIGS. 10-11 differ from the previous embodiments in that the acceleration signal As is converted from the time domain to the frequency domain, at least for the purpose of drift compensation. In each embodiment, a digital representation of the acceleration signal As is applied to a time-to-frequency converter block 80, which in practice may be a digital signal processor (DSP). The frequency domain signal is applied to block 82, which compensates for sensor drift effects due to aging and temperature. This is achieved by characterizing the drift effects in the time domain, converting the characterization to the frequency domain, and eliminating the effects from the frequency-domain acceleration signal. In the eighth embodiment of FIG. 10, a frequency-to-time domain converter 84 then converts the compensated acceleration signal back to the time domain, where it is compared with the arming threshold THR on line 46 by comparator 44. The comparator 44 and pulse stretcher 48 may operate as described above with respect to the embodiments of FIGS. 3-9. In the ninth embodiment of FIG. 11, the drift-compensated frequency domain acceleration signal is applied to block 88, which computes the power spectrum density (i.e., the power density of the signal at various frequencies) of the signal over a time window consistent with the duration of rollover events. The block 92 stores reference power spectrum densities of various types of rollover events, and the functional block 90 compares the computed power spectrum density with the reference power spectrum densities. If a close match is identified, block 90 activates the pulse stretcher 48 to produce an arming signal pulse (ARM) on line 50 as in the previous embodiments. The reference power spectrum densities stored in block 92 are determined based on characterizations of the frequency content of various kinds of rollover events, including curb trips, soil trips, and so forth.

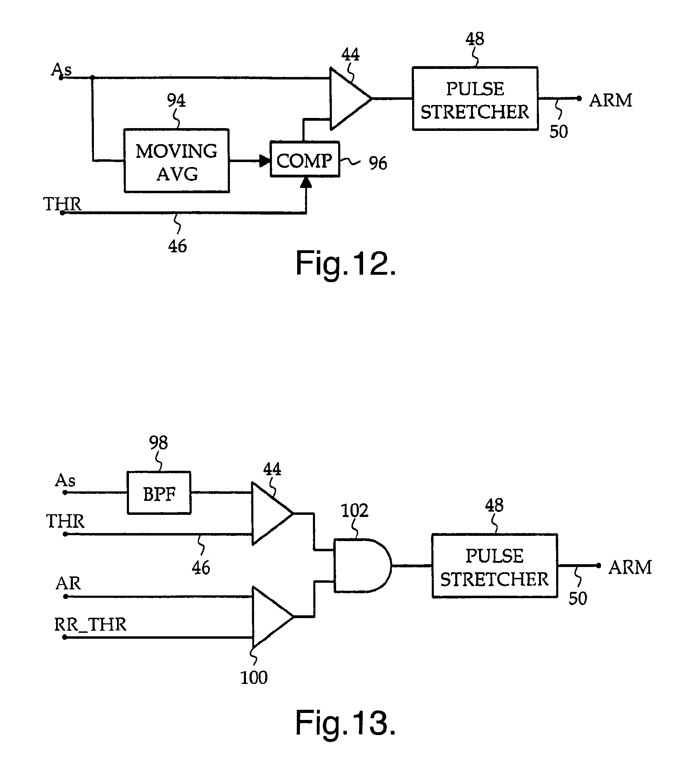

The tenth embodiment of FIG. 12 illustrates an alternative approach for removing the sensor bias effects. In this embodiment, the block 94 computes a moving average of the acceleration signal over an interval in the range of 0.5 - 20 seconds, and a compensation block 96 dynamically adjusts the arming threshold THR based on the output of block 94. The comparator 44 activates the pulse stretcher 48 when the acceleration signal exceeds the compensated arming threshold.

Finally, the eleventh embodiment of FIG. 13 differs from the previous embodiments in that it utilizes the output AR of angular rate sensor 24 in combination with the acceleration signal As. The acceleration signal As may be filtered as described above and compared with the arming threshold THR by comparator 44, although in FIG. 13 the filtering is achieved by a band-pass filter 98 that performs the filtering functions of blocks 40 and 42. The angular rate signal AR is compared to a roll rate threshold RR_THR by a comparator 100, and the AND block 102 activates the pulse stretcher 48 when the filtered acceleration signal and the angular rate signal both exceed their respective thresholds. The added use of the angular rate sensor signal tends to reduce activation of the arming signal during non-rollover event conditions.

In summary, the method of the present invention provides a reliable and cost-effective way of producing an arming or safing signal for enabling deployment of rollover safety devices based on an off-axis measure of vehicle acceleration. While the method has been described with respect to the illustrated embodiments, it is recognized that numerous modifications and variations in addition to those mentioned herein will occur to those skilled in the art. For example, the features of the different embodiments may be combined differently than specifically illustrated herein, and so on. Accordingly, it is intended that the invention not be limited to the disclosed embodiments, but that it have the full scope permitted by the language of the following claims.

## Claims

1. A method of indicating an existence of an operating state of a vehicle (10) that is consistent with a potential rollover of the vehicle (10), comprising the steps of:

   using a single acceleration sensor (22) to measure an off-axis acceleration of said vehicle (10) that is responsive to both lateral acceleration and vertical acceleration of said vehicle (10);
   processing the measured off-axis acceleration (40, 42);
   establishing an arming threshold (46); and
   producing an arming signal of a determined duration for indicating the existence of said operating state based on a comparison of said processed off-axis acceleration with said arming threshold (44, 48).

2. The method of claim 1, wherein the step of processing the measured off-axis acceleration includes the steps of:

   filtering out a DC component of the measured off-axis acceleration to form a rollover-related acceleration signal (40); and
   low-pass filtering said rollover-related acceleration signal (42) to compensate for drift-related measurement errors of said acceleration sensor (22).

3. The method of claim 2, wherein said low-pass filtering defines a cutoff frequency in the range of 2Hz to 15Hz (42).

4. The method of claim 1, including the steps of:

   filtering out a DC component of the measured off-axis acceleration to form a rollover-related acceleration signal (40);
   low-pass filtering said rollover-related acceleration signal with a cutoff frequency in the range of 15Hz to 40Hz to form said processed off-axis acceleration (52); and

producing said arming signal when said processed off-axis acceleration exceeds said arming threshold for at least a predetermined period of time (44, 54, 48).

5. The method of claim 4, including the step of:

dynamically adjusting said duration of said arming signal based on a secondary parameter that is indicative of a potential rollover event (78).

6. The method of claim 4, including the steps of:

low-pass filtering said rollover-related acceleration signal with a cutoff frequency in the range of 2Hz to 15Hz to form a secondary indication of rollover potential (42); and
determining said duration of said arming signal as a function of said secondary indication of rollover potential (78).

7. The method of claim 1, including the steps of:

filtering out a DC component of the measured off-axis acceleration to form a rollover-related acceleration signal (40); and
determining a rate of change of said rollover-related acceleration signal to form said processed off-axis acceleration, said arming threshold defining a predetermined rate of change of acceleration (57, 56).

8. The method of claim 1, including the step of:

dynamically adjusting said arming threshold based on a secondary parameter that is indicative of a potential rollover event (64, 72).

9. The method of claim 8, including the steps of:

filtering out a DC component of the measured off-axis acceleration to form a rollover-related acceleration signal (40); and
low-pass filtering said rollover-related acceleration signal with a cutoff frequency in the range of 15Hz to 40Hz (52), and determining a variation of such low-pass filtered signal to form said secondary parameter (58).

10. he method of claim 9, including the steps of:

establishing a variation threshold (62); and
reducing said arming threshold in relation to an amount by which said secondary parameter exceeds said variation threshold (60, 64).

11. The method of claim 8, including the steps of:

filtering out a DC component of the measured off-axis acceleration to form a rollover-related acceleration signal (40); and
determining a rate of change of said rollover-related acceleration signal to form said secondary parameter (68).

12. The method of claim 11, including the steps of:

establishing a rate threshold (56); and
reducing said arming threshold in relation to an amount by which said secondary parameter exceeds said rate threshold (70, 72).

13. The method of claim 1, including the step of:

dynamically adjusting said duration of said arming signal based on a secondary parameter that is indicative of a potential rollover event (78).

14. The method of claim 13, including the step of:

filtering out a DC component of the measured off-axis acceleration to form a rollover-related acceleration signal (40); and
determining a rate of change of said rollover-related acceleration signal to form said secondary parameter (68).

15. The method of claim 14, including the steps of:

establishing a rate threshold (56); and
determining said duration of said arming signal based on a comparison of said secondary parameter and said rate threshold (76, 78).

16. The method of claim 1, wherein the step of processing the measured off-axis acceleration includes the steps of:

converting the measured off-axis acceleration to a corresponding frequency domain signal (80); and
processing said frequency domain signal (82) to compensate for drift-related measurement errors of said acceleration sensor (22).

17. The method of claim 16, including the steps of:

converting the processed frequency domain signal to a corresponding time domain signal (84);
comparing said time domain signal to said arming threshold (44); and
producing said arming signal when said time domain signal exceeds said arming threshold (44, 48).

18. The method of claim 16, including the steps of:

computing a power spectrum density of the processed frequency domain signal (88);
establishing a set of reference power spectrum densities associated with rollover events (92); and
producing said arming signal when a comparison of the computed power spectrum density with said reference power spectrum densities identifies a match (90, 48).

19. The method of claim 1, including the steps of:

determining a moving average of said measured off-axis acceleration (94); and
establishing said arming threshold based on said moving average and a default arming threshold (46, 94, 96) to compensate said arming threshold for drift-related measurement errors of said acceleration sensor (22).

20. The method of claim 1, including the steps of:

measuring an angular rotation (24) about a longitudinal axis of said vehicle (10);
establishing a roll rate threshold; and
producing said arming signal when said processed off-axis acceleration signal exceeds said arming threshold and said angular rotation exceeds said roll rate threshold (44, 100, 102, 48).

21. The method of claim 1, including the step of:

mounting said acceleration sensor (22) so that its sensing axis (S) is laterally offset from vertical at an angle such that said measured off-axis acceleration more responsive to vertical acceleration of the vehicle (10) than to lateral acceleration of the vehicle (10).

22. The method of claim 21, wherein said angle is determined based on rollover safing thresholds for said lateral acceleration and said vertical acceleration.

## Fig.1.

## Fig.2A.

Fig.2B.

Fig.3.

Fig.4.

Fig.5.

Fig.6.

Fig.7.

Fig.8.

As ─ 40 [0.1 HZ HPF] ─ 52 [15-40 HZ LPF] ─ 44 ▷ ─ 54 [CTR / TMR] ─ 48 [PULSE STRETCHER] ─ ARM 50

THR ● 46

42 [2-15 HZ LPF] ─ 78 [PULSE DUR CALC]

**Fig.9.**

As ─ 80 [TIME / FREQ CONVERTER] ─ 82 [DRIFT COMPENSATION] ─ 84 [FREQ / TIME CONVERTER]

THR 46

44 ▽ ─ 48 [PULSE STRETCHER] ─ ARM 50

**Fig.10.**

As ─ 80 [TIME / FREQ CONVERTER] ─ 82 [DRIFT COMPENSATION] ─ 88 [PWR SPECTRUM DENSITY]

92 [ROLLOVER PSD]

90 ▽ ─ 48 [PULSE STRETCHER] ─ ARM 50

**Fig.11.**

12

Fig.12.

Fig.13.